# EUROPÄISCHE PATENTSCHRIFT

(11) **EP 3 571 100 B1**
(45) Veröffentlichungstag und Bekanntmachung des Hinweises auf die Patenterteilung: **14.10.2020**
(21) Anmeldenummer: 18778415.2
(22) Anmeldetag: 20.09.2018
(51) Int. Cl.: B60S 9/02

(54) **MONTAGEVORRICHTUNG FÜR EINE STÜTZVORRICHTUNG**
MOUNTING DEVICE FOR A LANDING GEAR
APPAREIL DE MONTAGE POUR DISPOSITIF DE SUPPORT

(30) Priorität: 26.09.2017 DE 102017122316
(43) Veröffentlichungstag der Anmeldung: 27.11.2019
(73) Patentinhaber: SAF-HOLLAND GmbH, 63856 Bessenbach (DE)
(72) Erfinder: WALLMEIER, Stefan, 63773 Goldbach (DE); WEBER, Elmar, 48249 Dülmen (DE)
(74) Vertreter: Müller Schupfner & Partner Patent- und Rechtsanwaltspartnerschaft mbB
(86) Internationale Anmeldenummer: PCT/EP2018/075419
(87) Internationale Veröffentlichungsnummer: WO 2019/063397

(56) Entgegenhaltungen:
- EP-A1- 1 595 761
- DE-A1-102012 103 698
- DE-A1-102013 202 076
- US-A1- 2007 012 132
- US-A1- 2013 187 106

## Beschreibung

Die vorliegende Erfindung betrifft eine Montagevorrichtung für Stützvorrichtungen, insbesondere von Nutzfahrzeugen, sowie eine Montagekonsole für eine Montagevorrichtung.

Stützvorrichtungen oder Stützwinden sind aus dem Stand der Technik bekannt. Sie dienen der Abstützung und/oder Höhenverstellung von Trailern, Sattelanhängern oder Fahrzeugen. Die aus dem Stand der Technik bekannten Stützvorrichtungen weisen hierzu meist ein äußeres- und ein inneres Stützrohr auf, welche teleskopisch ineinander verschoben werden können. Zur Anordnung an einem Trailer, Sattelanhänger oder Fahrzeug sind an der Stützvorrichtungen Montagevorrichtungen vorgesehen, welche, insbesondere bei stark belasteten Stützvorrichtungen, an einer korrespondierenden Fläche des Trailers stoffschlüssig angebracht sind. Diese stoffschlüssige Fixierung, welche meist durch Anschweißen erfolgt, verursacht dabei einen hohen Arbeitsaufwand und eine geringe Flexibilität bei hohen Belastungen.

Die DE 10 2013 202 076 A1, die US 2007/0012132 A1, die DE 10 2012 103 698 A1, die US 2013/0187106 A1 und die EP 1 595 761 A1 betreffend Stützeinheiten, welche jeweils Befestigungsbereiche mit einer Vielzahl von Montagelöchern aufweisen. US 2013 187 106 A1 offenbart den Oberbegriff des Anspruchs 1.

Aufgabe der Erfindung ist es eine Stützeinheit bereitzustellen, welche mit nur geringem Aufwand sicher montiert werden kann und hohen, insbesondere dynamischen, Kräften ausgesetzt werden kann.

Gelöst wird diese Aufgabe mittels einer Montagevorrichtung mit den Merkmalen des Anspruchs 1, sowie mittels einem Montagesystem gemäß Anspruch 11. Bevorzugte Ausführungsformen ergeben sich aus den abhängigen Ansprüchen.

Erfindungsgemäß umfasst eine Montagevorrichtung für eine Stützeinheit, insbesondere für Nutzfahrzeuge, zumindest einen Stützbereich, einen ersten Befestigungsbereich und einen zweiten Befestigungsbereich, wobei der Stützbereich dazu ausgelegt ist, die Stützkräfte, insbesondere in Stützrichtung, von der Stützeinheit oder einem Stützrohr aufzunehmen, wobei der erste Befestigungsbereich und der zweite Befestigungsbereich dazu ausgelegt sind, die Montagevorrichtung an einem weiteren Element, insbesondere einem Sattelanhänger, festzulegen, wobei der erste Befestigungsbereich zumindest ein Loch aufweist, wobei der zweite Befestigungsbereich zumindest ein Loch aufweist, und wobei die Löcher dazu ausgelegt sind, Befestigungsmittel aufzunehmen. Die Montagevorrichtung kann unter anderem ein Bestandteil einer Stützeinheit sein, wobei bei dieser Ausführungsform der Stützbereich unter anderem durch das Stützrohr selbst oder durch einen Teil davon gebildet sein kann oder durch eine Fläche, an welcher das Stützrohr festlegbar ist. Das Stützrohr ist dabei insbesondere der obere Teil der Stützeinheit, welcher vorteilhafterweise teleskopisch mit dem unteren Teil der Stützeinheit in Eingriff steht. Der untere Teil der Stützeinheit dient unter anderem dazu, mit einer Abstützfläche wie dem Boden in Kontakt zu treten, um das weitere Element abzustützen. In einer alternativen Ausführungsform kann die Montagevorrichtung auch ein separates Bauteil sein, welches zwischen der Stützeinheit und dem weiteren Element angeordnet ist. Bei dieser Art von Montagevorrichtung ist der Stützbereich insbesondere der Bereich der Montagevorrichtung, an welchem sich die Stützvorrichtung bzw. das Stützrohr abstützt oder angeordnet ist. Unabhängig von der Ausführungsform ist der Stützbereich daher dadurch charakterisiert, dass dieser dazu ausgelegt ist, Stützkräfte, welche insbesondere in Stützrichtung wirken, um das weitere Element abstützen, von der Stützeinheit, dem Stützrohr oder sonstigen Abstützelementen aufzunehmen. Zweckmäßigerweise kann der Stützbereich zur Erfüllung seiner Aufgabe zwischen den beiden Befestigungsbereichen angeordnete sein. In anderen Worten kann der Stützbereich somit die Befestigungsbereiche voneinander separieren. Die Stützrichtung ist insbesondere diejenige Richtung, in welche sich das Stützrohr oder die Stützeinheit hauptsächlich erstrecken. In anderen Worten kann die Stützrichtung daher insbesondere diejenige Richtung sein, welche entgegengesetzt zu dem Vektor der Erdbeschleunigung gerichtet ist. Die Befestigungsbereiche der Montagevorrichtung dienen dazu, die vom Stützbereich aufgenommenen Stützkräfte von der Montagevorrichtung mittelbar oder unmittelbar in das weitere Element abzuleiten. Das Ableiten kann daher mittelbar durch zum Beispiel eine Montagekonsole oder unmittelbar durch einen direkten Kontakt des einen oder beider Befestigungsbereiche mit einem weiteren Element erfolgen. Das weitere Element kann beispielsweise durch einen Anhänger, einen Sattelauflieger, einen Trailer oder deren Fahrzeugrahmen oder durch eine Montagekonsole gebildet sein. Das zumindest eine Loch im ersten Befestigungsbereich und das zumindest eine Loch im zweiten Befestigungsbereich sind insbesondere zumindest bereichsweise rund und dienen dazu, Befestigungsmittel wie zum Beispiel Schrauben oder Bolzen aufzunehmen, sodass die Montagevorrichtung mittel- oder unmittelbar an einem weiteren Element festgelegt werden kann. Hierdurch wird erreicht, dass die Stützeinheit, insbesondere reversibel (zerstörungsfrei), lösbar an dem weiteren Element festgelegt ist, sodass die Stützeinheit einfach und kostengünstig montiert werden kann. Aufgrund der Flexibilität der Verbindung ist die Montagevorrichtung in der Lage, auch hohen dynamischen Kräften ausgesetzt zu werden. Die Löcher durchdringen die Montagebereiche dabei bevorzugt vollständig und sind zumindest bereichsweise rund, sodass die Löcher unter anderem Langlöcher sein können. Bevorzugt sind die Löcher jedoch kreisrund ausgeformt, sodass diese besonders kostengünstig hergestellt werden können.

Erfindungsgemäß weist der erste Befestigungsbereich eine Vielzahl von Löchern auf, welche eine erste Lochreihe bilden, und wobei der zweite Befestigungsbereich eine Vielzahl von Löchern aufweist, welche eine zweite Lochreihe bilden. Unter Vielzahl ist dabei insbesondere zu verstehen, dass mehr als zwei, insbesondere vier, fünf, sechs, sieben oder acht Löcher die Lochreihe bilden. Unter "Lochreihe" kann unter anderem verstanden werden, dass die Mittelpunkte der Löcher sich insbesondere entlang einer geraden Linie erstrecken. Durch das Anordnen der Löcher in den Befestigungsbereichen entlang einer Linie oder Geraden kann erreicht werden, dass eine besonders kostengünstige Fertigung der Montagevorrichtung erreicht wird. Alternativ kann eine "Lochreihe" auch durch Anordnen von Löchern entlang einer Kreisbahn oder einem Teil davon gebildet sein. Der Vorteil dieser Ausführungsform liegt darin, dass ein besonders großer Bereich zum Übertragen der Kräfte bei dieser Lochanordnung zur Verfügung steht. Um zu erreichen, dass die Fertigung besonders günstig ist, ist es bevorzugt, wenn die Löcher äquidistant entlang der Lochreihe angeordnet sind. Alternativ kann der Abstand auch nicht äquidistant zumindest zwischen einigen Löchern der Lochreihe sein. Hierdurch wird erreicht, dass insbesondere in besonders stark belasteten Bereichen hohe Montagekräfte übertragen werden können. Besonders zweckmäßig ist es, wenn die Löcher an den Endbereichen der Lochreihe oder des Lochkreissegments geringer voneinander beabstandet sind als in der "Mitte" der Lochreihe. Durch diese Art der Lochanordnungen in den Befestigungsbereichen kann in effektiver Weise ein Aufklaffen der Trennfuge zwischen der Montagevorrichtung und dem weiteren Element oder Montagekonsole verhindert werden, da die Belastungen in der "Mitte" meist geringer sind.

Vorteilhafterweise weisen zumindest zwei Löcher der ersten Lochreihe unterschiedliche Geometrien, insbesondere Durchmesser, und/oder wobei zumindest zwei Löchern der zweiten Lochreihe unterschiedliche Geometrien, insbesondere Durchmesser, aufweisen. Die Geometrien der Löcher sind dabei insbesondere durch die von den Löchern gebildeten Konturen im Befestigungsbereich charakterisiert. Zweckmäßigerweise handelt es sich bei den Löchern um zumindest bereichsweise runde, insbesondere kreisrunde Löcher. In anderen Worten bedeutet dies, dass die Löcher zweckmäßigerweise kreisrunde Löcher oder Langlöcher sein können. Der Durchmesser bei Langlöchern ist dabei insbesondere die Erstreckung des Langlochs senkrecht zu seiner Haupterstreckungsrichtung. In anderen Worten kann der Durchmesser eines Langlochs der Abstand zwischen den beiden parallel zueinander ausgerichteten Flanken sein. Durch die Verwendung unterschiedlicher Geometrien, insbesondere Durchmesser, der Löcher in den Befestigungsbereichen ist es möglich, die - in hochbelasteten und gegebenenfalls niedrigbelasteten Bereichen der Befestigungsbereiche - zum Einsatz kommenden Befestigungsmittel an die gegebenen Belastungen anzupassen und somit Kosten zu sparen.

Bevorzugt weist das oder die Löcher des ersten Befestigungsbereichs und/oder das oder die Löcher des zweiten Befestigungsbereichs einen Durchmesser auf, welcher im Verhältnis zu einer Wandstärke des jeweiligen Befestigungsbereichs von 2,33 bis 4,75 liegt. Hierdurch kann eine besonders geringe Kerbwirkung erreicht werden. Die Wandstärke des Befestigungsbereichs ist dabei insbesondere die Materialstärke desselbigen in die Richtung, in welche sich auch die Löcher erstrecken. Bevorzugt liegt das Verhältnis in einem Bereich von 2,66 bis 4,5. Es hat sich gezeigt, dass in diesem Bereich ein besonders guter Kompromiss zwischen einer homogenen Verteilung der Flächenpressung in der Trennfuge und einem geringen Gewicht der Montagevorrichtung erzielt werden kann.

Erfindungsgemäß verläuft die erste Lochreihe schräg und/oder die zweite Lochreihe schräg. Schräg bedeutet dabei unter anderem, dass die Lochreihen einen Winkel ungleich 0° oder 180° mit der Stützrichtung bilden. Besonders bevorzugt bildet die schräge Lochreihe oder die schrägen Lochreihen auch keinen Winkel von 90° mit der Stützrichtung. In anderen Worten verläuft die erste und/oder die zweite Lochreihe daher geneigt zu der Stützrichtung. Hierdurch wird ermöglicht, dass ein besonders geringer Bauraum, insbesondere in Stützrichtung, von der Montagevorrichtung eingenommen wird, wobei dennoch hohe, insbesondere dynamische Kräfte, aufgenommen werden können. Um geringe Fertigungskosten zu erreichen, ist es vorteilhaft, wenn die beiden Lochreihen dabei parallel zueinander verlaufen. Alternativ bevorzugt können die Lochreihen auch einen Winkel ungleich 0° oder 180° zueinander aufweisen. In anderen Worten kann dies bedeuten, dass die Lochreihen eine Art V-Form zueinander bilden, wobei das V in die Stützrichtung nach oben oder nach unten zeigen kann. Eine V-Form kann insbesondere auch gegeben sein, wenn sich die beiden Flanken des Vs in einer gedachten Verlängerung schneiden. Hierbei bezeichnet oben oder unten jeweils die positive, insbesondere entgegen der Richtung der Schwerkraft, oder negative Richtung der Stützrichtung. Das V-förmige Anordnen der Lochreihen zueinander hat dabei insbesondere den Vorteil, dass in einer besonders stabilen Art und Weise hohe Momente von der Montagevorrichtung in das weitere Element abgeleitet werden können, dies kann insbesondere bei unebenen Untergründen wichtig sein. Es kann dabei zweckmäßig sein, wenn die Winkelhalbierende - der V-förmig zueinander angeordneten ersten und zweiten Lochreihe - einen Winkel mit der Stützrichtung bildet, welcher ungleich 0° oder 180° ist. Durch diese Maßnahme kann die Montagevorrichtung, insbesondere deren Befestigungsbereiche, optimal an den zur Verfügung stehenden Bauraum angepasst werden.

Vorteilhafterweise bildet die erste Lochreihe mit der zweiten Lochreihe einen ersten Winkel, welcher im Bereich von 87° bis 5° liegt. Durch diese Winkligkeit wird erreicht, dass die effektiv zur Verfügung stehende Montagelänge, welche durch die beiden Lochreihen gebildet ist, vergrößert wird, sodass besonderes hohe und dynamische Kräfte von der Montagevorrichtung in das weitere Element - über die Befestigungsbereiche - sicher ausgeleitet werden können. Bevorzugt liegt der erste Winkel in einem Bereich von 45° bis 10°, um auch hohe Momente aufnehmen zu können. Besonders bevorzugt liegt der erste Winkel zwischen 26° und 19°, denn es hat sich gezeigt, dass in diesem Bereich eine besonders homogene Flächenpressung in der Montagefuge vorliegt, sodass lokale plastische Verformungen vermieden werden können.

Bevorzugt steht der Abstand in die Stützrichtung benachbarter Löcher der ersten Lochreihe zueinander und/oder der Abstand in Stützrichtung benachbarter Löcher der zweiten Lochreihe zueinander in einem Verhältnis zu der Wandstärke des jeweiligen Befestigungsbereichs in einem Bereich von 7,5 bis 17,5, bevorzugt 8,3 bis 16,3 und besonders bevorzugt 10 bis 15. Hierdurch kann ein besonders geringer Bauraumbedarf der Montagevorrichtung sichergestellt werden. Die Abstände der Löcher beziehen sich dabei auf zwei direkt benachbarte Löcher zueinander. Bevorzugt beziehen sich die Abstände nicht nur auf zwei benachbarte Löcher, sondern auf die überwiegende Anzahl von benachbarten Löchern der Lochreihe und besonders bevorzugt auf alle benachbarten Löcher der jeweiligen Lochreihe zueinander. Unter benachbart kann insbesondere auch nächstliegend verstanden werden. Um eine besonders standfeste Montagevorrichtung zu erreichen, ist es zweckmäßig, wenn das Verhältnis der Abstände in Stützrichtung benachbarter Löcher zu der Wandstärke des jeweiligen Befestigungsbereichs in einem Bereich von 8,3 bis 16,3 liegt, denn es hat sich gezeigt, dass die Befestigungsbereiche bei dieser Ausgestaltung eine besonders geringe Neigung zu Rissbildung aufweisen. Um eine besonders homogene Flächenpressung in der Trennfuge zu erreichen, ist es besonders bevorzugt, wenn das Verhältnis der Abstände in Stützrichtung benachbarter Löcher zu der Wandstärke des jeweiligen Befestigungsbereichs in einem Bereich von 10 bis 15 liegt.

Zweckmäßigerweise steht der Abstand in eine Längsrichtung benachbarter Löcher der ersten Lochreihe zueinander und/oder der Abstand in Längsrichtung benachbarter Löcher der zweiten Lochreihe zueinander in einem Verhältnis der Wandstärke des jeweiligen Befestigungsbereichs von 0,5 bis 5. Bei dieser Art der Ausgestaltung der Befestigungsbereiche relativ zu den Löchern des jeweiligen Befestigungsbereichs ist es möglich, eine besonders gute Abstützwirkung auch gegenüber Kräften quer zur Abstützrichtung zu erreichen. Die Längsrichtung steht insbesondere senkrecht auf der Stützrichtung und möglichst auch senkrecht auf der Richtung, in welcher sich die Löcher erstrecken. In anderen Worten kann die Längsrichtung daher diejenige Richtung sein, in welcher sich die Länge des weiteren Elements bestimmt, an welchem die Montagevorrichtung festlegbar ist. Um eine besonders standfeste Montagevorrichtung, insbesondere bedingt durch geringe Kerbwirkung, zu erzielen, ist es bevorzugt, wenn das Verhältnis zwischen 0,8 bis 3,8 liegt. Besonders bevorzugt liegt das Verhältnis zwischen 1,1 und 2,5, denn es hat sich gezeigt, dass bei einer derartigen Ausgestaltung eine besonders homogene Flächenpressung am Befestigungsbereich vorliegt. Die angegebenen Abstände benachbarter Löcher zueinander beziehen sich dabei auf jeweils zwei benachbarte Löcher der ersten und/oder der zweiten Lochreihe. Bevorzugt beziehen sich die Abstände nicht nur auf zwei Löcher, sondern auf die überwiegende Anzahl von benachbarten Löchern der jeweiligen Lochreihe zueinander und besonders bevorzugt auf alle benachbarten Löcher der jeweiligen Lochreihe zueinander.

Bevorzugt liegt der mittlere Abstand der ersten Lochreihe zur zweiten Lochreihe in einem Verhältnis zu einer gemittelten Wandstärke der Befestigungsbereiche in einem Bereich von 29 bis 62,5, bevorzugt von 30 bis 51 und besonders bevorzugt von 31,5 bis 48. Hierdurch kann eine besonders hohe Standfestigkeit aufgrund von geringen Kerbwirkungen - bedingt durch die Lochreihe - erzielt werden. Der mittlere Abstand der ersten Lochreihe zur zweiten Lochreihe bestimmt sich insbesondere durch die Beabstandung des Mittelpunkts der ersten Lochreihe zum Mittelpunkt der zweiten Lochreihe. Der Mittelpunkt der Lochreihe ist dabei der geometrische Mittelpunkt der Verbindungsgraden der meist beabstandeten Löcher der Lochreihe zueinander. Die gemittelte Wandstärke der Befestigungsbereiche ist dabei der Mittelwert der Wandstärke aus dem ersten Befestigungsbereich und der Wandstärke des zweiten Befestigungsbereichs. Sollten die Befestigungsbereiche veränderliche Wandstärken aufweisen, so bestimmt sich die Wandstärke des jeweiligen Befestigungsbereichs durch die flächengemittelte Wandstärke. Bevorzugt liegt das Verhältnis des mittleren Abstands - der ersten Lochreihe zur zweiten Lochreihe - zur gemittelten Wandstärke der Befestigungsbereiche in einem Bereich von 30 bis 51. Denn es hat sich gezeigt, dass bei einem solchen Verhältnis eine besonders homogene Flächenpressung in der Trennfuge vorliegt. Um eine geringe Neigung zu Rissen zu erreichen, ist es besonders bevorzugt, wenn das Verhältnis in einem Bereich von 31,5 bis 48 liegt.

Bevorzugt bildet die Normale einer distal berandeten Fläche des ersten Befestigungsbereichs, insbesondere in Längsrichtung, einen zweiten Winkel von 55° bis 87° mit der Stützrichtung und/oder wobei die Normale einer zweiten distal berandenden Fläche des zweiten Befestigungsbefestigungsbereichs, insbesondere in Längsrichtung, einen dritten Winkel von 55° bis 87° mit der Stützrichtung bildet.

Die distal berandenden Flächen sind insbesondere diejenigen Flächen, welche das distale Ende des ersten oder des zweiten Befestigungsbereichs, insbesondere in Längsrichtung, bilden. Bevorzugt sind die beiden distal berandeten Flächen dabei voneinander wegorientiert und können somit insbesondere die gegenüberliegenden Berandungen der Montagevorrichtung, insbesondere in Längsrichtung, bilden. Die Normale der distal berandenden Flächen ist dabei die nach außen weisende gemittelte Normale der distal berandenden Flächen. Bevorzugt weist diese Normale dabei zum überwiegenden Teil in die Längsrichtung. Durch die Winkligkeit der ersten distal berandenden Fläche und/oder der zweiten distal berandenden Fläche zur Stützrichtung ist es möglich, die Montage der Montagevorrichtung erheblich zu vereinfachen, da die winklige äußere Erscheinung der Montagevorrichtung für das Zentrieren derselbigen genutzt werden kann. Bevorzugt liegt der zweite Winkel und/oder der dritte Winkel in einem Bereich von 65° bis 85°. Hierdurch kann eine besonders gute Abstützwirkung der Montagevorrichtung erreicht werden, wenn hohe Momente auf die oder den Stützbereich wirken. Besonders bevorzugt liegt der zweite Winkel und/oder der dritte Winkel in einem Bereich von 75° bis 80°. Diese Ausgestaltung der Montagevorrichtung hat dabei den Vorteil, dass ein besonders geringer Bauraumbedarf der Montagevorrichtung erreicht werden kann. Besonders zweckmäßig kann es sein, wenn die erste und/oder die zweite Lochreihe parallel zu der ersten und/oder der zweiten distal berandenden Fläche verlaufen. Der Vorteil dieser Ausführungsform liegt darin, dass die distal berandenden Flächen während der Fertigung als Anschlagsflächen genutzt werden können, sodass eine besonders kostengünstige Fertigung und somit Montagevorrichtung resultiert.

Bevorzugt weist die Montagevorrichtung einen Abstützbereich auf, welcher sich in eine Querrichtung oder eine Lochrichtung von zumindest einem der Befestigungsbereiche oder dem Stützbereich weg erstreckt und eine Anlagefläche aufweist, welche dazu ausgelegt ist, formschlüssig eine Kraft von der Montagevorrichtung auf das weitere Element, insbesondere in Stützrichtung, zu übertragen. Die Querrichtung steht zweckmäßigerweise senkrecht auf der Stützrichtung und der Längsrichtung. Insbesondere kann die Querrichtung dabei diejenige Richtung sein, welche der Breitenrichtung des weiteren Elements entspricht. In anderen Worten kann die Querrichtung diejenige Richtung sein, in welche sich die Breite des weiteren Elements wie einem Anhänger oder Sattelauflieger bestimmt. Die Lochrichtung ist diejenige Richtung, in welche sich die Löcher der Montagevorrichtung, insbesondere die Löcher des ersten und/oder des zweiten Befestigungsbereichs erstrecken. Bevorzugt weist die Lochrichtung im Wesentlichen in die Querrichtung. Unter im Wesentlichen in Querrichtung ist zu verstehen, dass geringe Abweichung bis zu einem Winkel von 10°, vorzugsweise 5°, mit der Querrichtung als im Wesentlichen in Querrichtung anzusehen sind. Das formschlüssige Übertragen der Kräfte zwischen dem Abstützbereich der Montagevorrichtung und dem weiteren Element oder einer Montagekonsole kann beispielsweise durch eine Hinterschneidung mit dem weiteren Element oder der Montagekonsole erreicht werden. Dies kann insbesondere dadurch erfolgen, dass der Abstützbereich unter das weitere Element oder die Montagekonsole greift. Durch dieses Untergreifen ist es möglich, dass eine Schwächung des weiteren Elements oder der Montagekonsole vermieden werden kann. Die Anlagefläche des Abstützbereichs ist diejenige Fläche des Abstützbereichs, welche mit dem weiteren Element oder mit der Montagekonsole in Kontakt tritt und dabei formschlüssig eine Kraft von der Montagevorrichtung auf das weitere Element oder die Montagekonsole überträgt. Bevorzugt weist die Anlagefläche dabei eine gemittelte nach außen weisende Normale auf, welche im Wesentlichen in Stützrichtung zeigt. Unter im "Wesentlichen in Stützrichtung" ist dabei in diesem Zusammenhang zu verstehen, dass die gemittelte Normale der Fläche einen Winkel zu der Stützrichtung von maximal 10° aufweisen darf. Durch diese Anordnung oder Ausrichtung der Anlagefläche kann eine resultierende Querkraft in einer einfachen aber effektiven Weise vermieden werden. Bevorzugt ist der Abstützbereich einteilig mit der Montagevorrichtung ausgebildet. Dies kann in einer besonders kostengünstigen Weise insbesondere durch ein Anschweißen des Abstützbereichs an die Montagevorrichtung erreicht werden. Durch die Einstückigkeit kann sichergestellt werden, dass besonders hohe, insbesondere dynamische, Kräfte von der Montagevorrichtung in das weitere Element abgeleitet werden können.

Weiterhin erfindungsgemäß umfasst eine Montagekonsole einen Festlegungsbereich und einen Anordnungsbereich, wobei der Anordnungsbereich dazu ausgelegt ist, mit einer Montagevorrichtung wie vorstehend beschrieben, in Kontakt zu treten, und wobei der Festlegungsbereich dazu ausgelegt ist, an einer Festlegungsfläche eines weiteren Elements angeordnet zu sein. Die Montagekonsole kann dabei ein separates Bauteil sein, oder auch einstückig, insbesondere durch formschlüssiges Fügen, mit dem weiteren Element ausgebildet sein. Generell ist die Montagekonsole dazu ausgelegt, Kräfte von einer Montagevorrichtung aufzunehmen und diese sicher auf eine Festlegungsfläche des weiteren Elements zu übertragen. Der Festlegungsbereich der Montagekonsole dient also insbesondere dazu, derart mit einer Festlegungsfläche des weiteren Elements, insbesondere unmittelbar, in Kontakt zu treten, dass eine sichere Kraftübertragung stattfinden kann. Diese Kraftübertragung kann dabei sowohl durch eine reversible Verbindung, wie insbesondere eine schraubbare Verbindung, oder durch eine stoffschlüssige Verbindung, insbesondere Schweißen, erfolgen. Der Anordnungsbereich der Montagekonsole hingegen dient dazu, Kräfte von einer Montagevorrichtung aufzunehmen. Zweckmäßigerweise weist der Anordnungsbereich dazu Öffnungen auf, welche dazu ausgelegt sein können, Montagemittel wie zum Beispiel Schrauben aufzunehmen. Diese Öffnungen können sowohl als Durchgangsloch oder auch als Sackloch ausgebildet sein.

Ferner kann eine Montagekonsole einen Festlegungsbereich, einen Anordnungsbereich und einen Hinterschneidungsabschnitt umfassen, wobei der Anordnungsbereich dazu ausgelegt ist, mit einer Montagevorrichtung in Kontakt zu treten, wobei der Festlegungsbereich dazu ausgelegt ist, an einer Festlegungsfläche eines weiteren Elements angeordnet zu sein, und wobei der Hinterschneidungsabschnitt dazu ausgelegt ist, derart formschlüssig mit der Montagevorrichtung in Eingriff zu gelangen, dass eine Verlagerung der Montagevorrichtung relativ zur Montagekonsole zumindest in eine Richtung, insbesondere in Stützrichtung, verhindert ist. Der Hinterschneidungsabschnitt springt dabei bevorzugt in eine Querrichtung vor, welche insbesondere parallel zu der Normalen der Festlegungsfläche orientiert ist. Der Hinterschneidungsabschnitt kann vorzugsweise ein Teil des Anordnungsbereichs sein oder alternativ auch ein separates Element der Montagekonsole darstellen. Zweckmäßigerweise befindet sich der Hinterschneidungsabschnitt im oberen oder unteren Drittel des Anordnungsbereichs der Montagekonsole, insbesondere bezogen auf die Stützrichtung. Hierdurch wird erreicht, dass der Hinterschneidungsabschnitt zusätzlich auch noch Momente übertragen kann, sodass eine besonders sichere Abstützwirkung der Montagekonsole erzielt werden kann. Vorteilhafterweise ist der Hinterschneidungsabschnitt derart ausgebildet, dass dieser eine Verlagerung in Stützrichtung und/oder in Querrichtung formschlüssig - zumindest jeweils in eine positive und/oder negative Richtung - verhindert. Dies kann insbesondere dadurch erreicht werden, dass der Hinterschneidungsabschnitt zumindest bereichsweise einen Hinterschnitt mit, insbesondere einem der Befestigungsbereiche, der Montagevorrichtung bildet. Alternativ oder zusätzlich kann der Hinterschnitt auch mit einem Teil des Stützbereichs der Montagekonsole gebildet werden.

Weitere Vorteile und Merkmale der vorliegenden Erfindung ergeben sich aus der nachfolgenden Beschreibung mit Bezug auf die beigefügten Figuren. Einzelne in den gezeigten Ausführungsformen offenbarte Merkmale können auch in anderen Ausführungsformen eingesetzt werden und/oder kombiniert werden, sofern dies nicht ausdrücklich ausgeschlossen wurde. Es zeigen:
- Figur 1: eine an einem weiteren Element festgelegte Stützvorrichtung;
- Figur 2: eine Ausführungsform einer Montagevorrichtung;
- Figur 3: eine weitere Ausführungsform einer Montagevorrichtung;
- Figur 4: eine weiter bevorzugte Ausführungsform einer Montagevorrichtung;
- Figur 5: eine Ausführungsform einer Montagevorrichtung mit einem Abstützbereich;
- Figur 6: eine weitere Ausführungsform einer Montagevorrichtung mit einem Abstützbereich;
- Figur 7: eine Montagevorrichtung in Kombination mit einer Montagekonsole;
- Figur 8: eine erfindungsgemäße Montagekonsole;
- Figur 9: eine weitere Ausführungsform einer Montagekonsole;
- Figur 10: eine alternative Ausführungsform einer Montagevorrichtung;
- Figur 11: verschiedenste Varianten von erfindungsgemäßen Montagekonsolen;

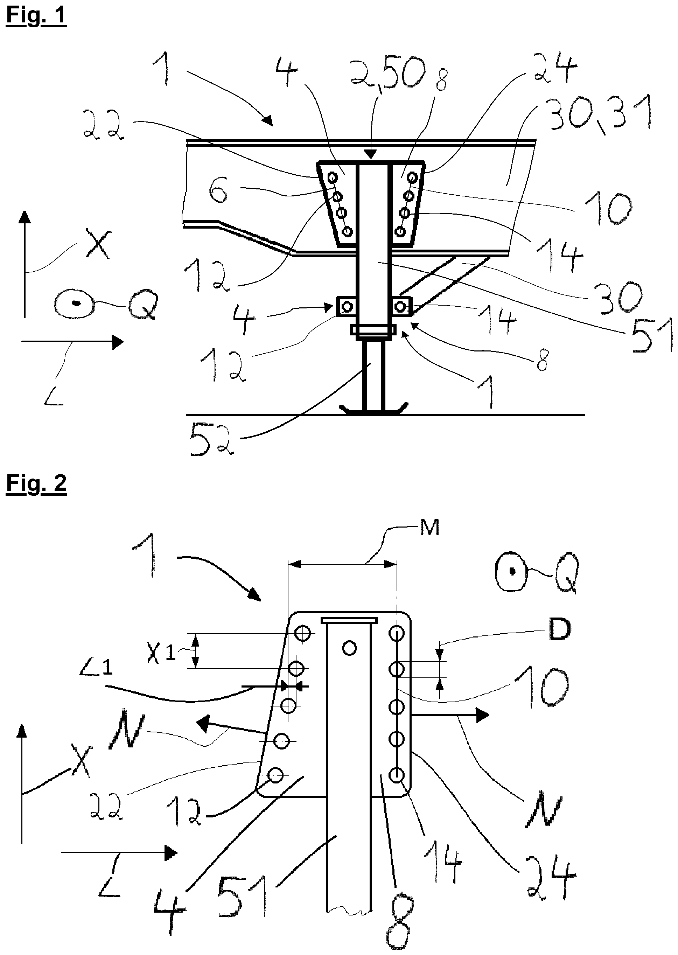

Figur 1 zeigt im oberen Bereich der Stützvorrichtung 50 eine primäre Montagevorrichtung 1, welche einen ersten Befestigungsbereich 4, einen zweiten Befestigungsbereich 8 und einen Stützbereich 2 umfasst. Der Stützbereich 2 dient dabei dazu, Kräfte, insbesondere in Stützrichtung X, vom Stützrohr 51 der Stützvorrichtung 50 aufzunehmen. Die Stützvorrichtung 50 umfasst unter anderem das Stützrohr 51 und einen unteren Teil der Stützeinheit 52, welcher dazu ausgelegt ist, mit dem Boden in Kontakt zu treten. In der in Figur 1 dargestellten Anordnung wird die Stützvorrichtung 50 sowohl mit einer primären Montagevorrichtung 1 (obige) und einer sekundären Montagevorrichtung 1 (untere) am weiteren Element 30 festgelegt. Die primäre Montagevorrichtung 1 liegt dabei in positiver Stützrichtung X beabstandet zur sekundären Montagevorrichtung 1. Die in der Figur 1 dargestellte primäre Montagevorrichtung 1 weist in ihrem ersten Befestigungsbereich 4 vier Löcher 12 auf, welche eine erste Lochreihe 6 miteinander bilden. Die distal berandende Fläche des ersten Befestigungsbereichs 22 berandet dabei den ersten Befestigungsbereich 4 in negativer Längsrichtung L. Der zweite Befestigungsbereich 8 der primären Montagevorrichtung 1 ist dabei spiegelsymmetrisch zum ersten Befestigungsbereich 4 bezüglich einer Ebene aufgebaut, welche durch die Querrichtung Q und die Stützrichtung X aufgespannt wird. Die primäre Montagevorrichtung 1 leitet die Stützkräfte, welche überweigend in Stützrichtung X wirken, auf die Festlegungsfläche 31 des weiteren Elements 30 aus. Die sekundäre Montagevorrichtung 1 umfasst ebenfalls einen ersten Befestigungsbereich mit einem Loch 12 und einen zweiten Befestigungsbereich 8 mit einem Loch 14.

Die Figur 2 zeigt eine weitere Ausführungsform einer Montagevorrichtung 1. In der dargestellten Ausführungsform der Montagevorrichtung 1 ist der mittlere Abstand M der ersten Lochreihe 6, welche in Figur 2 aufgrund der Übersichtlichkeit nicht extra gekennzeichnet ist, mit einer zweiten Lochreihe 10 des zweiten Befestigungsbereichs 4 dargestellt. Die Löcher 14 des zweiten Befestigungsbereichs 8 weisen einen Durchmesser D auf. Die Löcher 12 des ersten Befestigungsbereichs 4 weisen einen Abstand X1 in Stützrichtung X und einen Abstand L1 in Längsrichtung L zueinander auf. Die erste Lochreihe des ersten Befestigungsbereichs 4 ist dabei ebenso wie die zweite Lochreihe 10 des zweiten Befestigungsbereiches 8 jeweils parallel zu der distal berandenden Fläche des Befestigungsbereichs (22, 24) angeordnet. In der Figur 2 ist sowohl die Normale N der distal berandenden Fläche des ersten Befestigungsbereichs 22 und auch die Normale N der distal berandenden Fläche des zweiten Befestigungsbereichs 24 erkennbar. Die Querrichtung Q ist dabei parallel zu der Lochrichtung sowohl der Löcher 12 als auch der Löcher 14 orientiert.

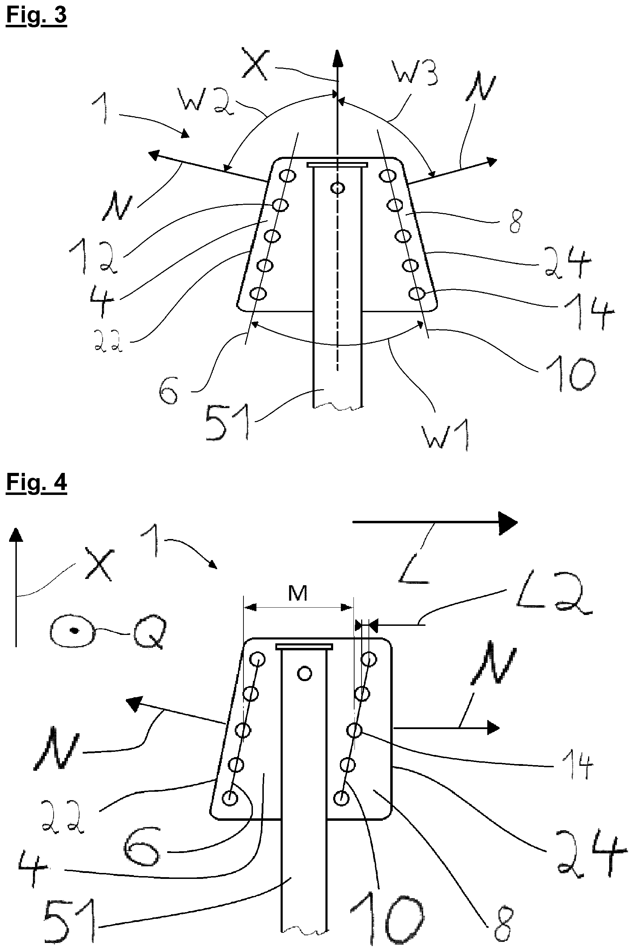

Die Figur 3 zeigt eine weitere Ausführungsform einer Montagevorrichtung 1, welche einen ersten Befestigungsbereich 4 und einen zweiten Befestigungsbereich 8 aufweist. Der erste Befestigungsbereich 4 umfasst eine erste Lochreihe 6, welche durch die Löcher 12 gebildet wird und der zweite Befestigungsbereich 8 eine zweite Lochreihe 10, welche durch die Löcher 14 gebildet wird. Die erste Lochreihe 6 und die zweite Lochreihe 10 verlaufen dabei beide schräg. In anderen Worten bedeutet dies, dass die beiden Lochreihen jeweils einen Winkel ungleich 0° oder 180° mit der Stützrichtung X bilden. Zusätzlich verlaufen die beiden Lochreihen 6 und 10 auch derart zueinander, dass diese einen ersten Winkel W1 zueinander bilden, wobei die Winkelhalbierende des ersten Winkels W1 parallel zur Stützrichtung X orientiert ist. Die distal berandende Fläche des ersten Befestigungsbereichs 22 weist eine nach außen weisende Normale N auf, welche einen zweiten Winkel W2 mit der Stützrichtung X bildet. Ebenso weist die distal berandende Fläche des zweiten Befestigungsbereichs 24 eine Normale N auf, welche einen dritten Winkel W3 mit der Stützrichtung X bildet. In der in der Figur 3 dargestellten Ausführungsform sind der Winkel W2 und der Winkel W3 dabei gleich groß. Alternativ bevorzugt können die Winkel jedoch auch unterschiedlich groß sein. In der dargestellten Ausführungsform in der Figur 3 bilden die erste Lochreihe 6 und die zweite Lochreihe 10 dabei eine V-Form zueinander, wobei das V in der dargestellten Ausführungsform nach unten - gesehen in Stützrichtung X - offen ist. In der in Figur 3 dargestellten Ausführungsform bilden auch die distal berandende Fläche des ersten Befestigungsbereichs 22 und die distal berandende Fläche des zweiten Befestigungsbereichs 24 eine in Stützrichtung nach unten offene V-Form aus. Der Stützbereich 2 ist in der Fig. 3 nicht erkennbar, denn dieser wird vom Stützrohr 51 überdeckt.

Die Montagevorrichtung 1, welche in der Figur 4 dargestellt ist, unterscheidet sich im Vergleich zu der in der Figur 3 dargestellten Variante unter anderem dadurch, dass die zweite Lochreihe 10 des zweiten Befestigungsbereichs 8 derart angeordnet ist, dass diese Lochreihe parallel zur ersten Lochreihe 6 verläuft. Die Löcher 14 der zweiten Lochreihe 10 weisen dabei einen Abstand L2 in Längsrichtung L zueinander auf. In der dargestellten Ausführungsform zeigt die Normale N der distal berandenden Fläche des zweiten Befestigungsbereichs 24 in die Längsrichtung L. Die distal berandende Fläche des ersten Befestigungsbereichs 22 hingegen ist derart ausgestaltet, dass diese Fläche parallel zur ersten Lochreihe 6 ausgerichtet ist und einen Winkel mit der Stützrichtung X bildet, welcher ungleich 90° ist.

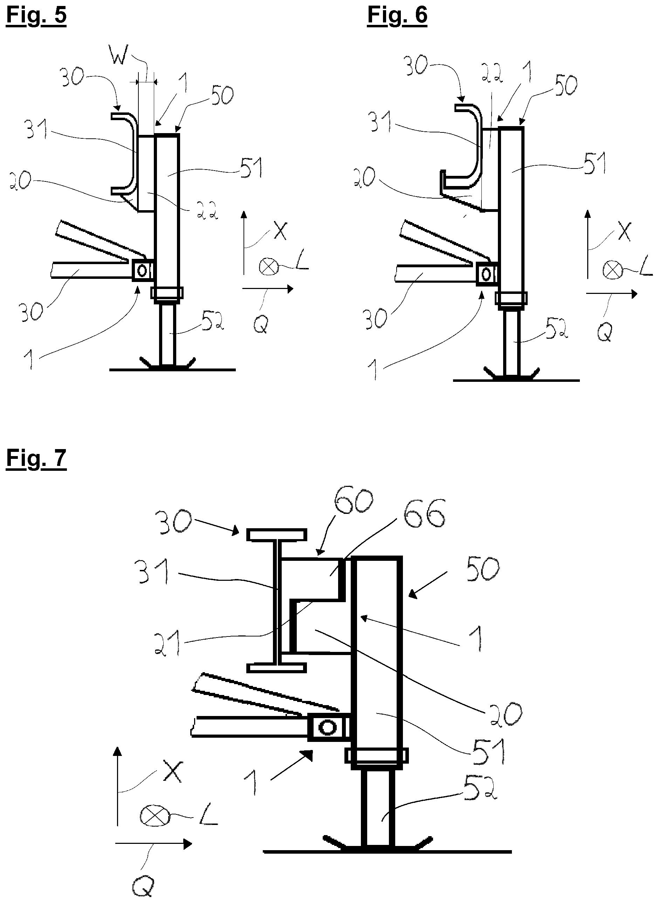

Die Figur 5 zeigt eine Seitenansicht einer Stützeinheit 50, welche mittels einer primären Montagevorrichtung 1 und einer sekundären Montagevorrichtung 1 an einem weiteren Element 30 festgelegt ist. Die primäre Montagevorrichtung 1, welche in positiver Stützrichtung X von der sekundären Montagevorrichtung 1 beabstandet ist, weist einen Abstützbereich 20 auf, welcher formschlüssig unter das weitere Element 30 greift. In der Fig.5 ist darüber hinaus auch die Wandstärke W der beiden Befestigungsbereiche der primären Montagevorrichtung 1 erkennbar. Der Stützbereich weist dabei vorteilhafterweise die gleiche Wandstärke auf, wie die Wandstärke W der Befestigungsbereiche.

In der Figur 6 ist eine Seitenansicht oder Hinteransicht einer weiteren Ausführungsform einer Stützeinheit 50 erkennbar, welche eine primäre und eine sekundäre Montagevorrichtung 1 aufweist. Der Abstützbereich 20 der in der Figur 6 dargestellten Ausführungsform der Montagevorrichtung 1 ist derart gestaltet, dass dieser nicht nur eine formschlüssige Verlagerung in Stützrichtung X verhindert, sondern auch in der Lage ist, eine Verlagerung in die positive und negative Querrichtung Q zu verhindern. Dies erreicht der Abstützbereich 20 unter anderem dadurch, dass dieser das weitere Element 30 nicht nur untergreift, sondern zusätzlich oder gleichzeitig noch formschlüssig hintergreift.

In der Figur 7 ist eine Stützeinheit 50 gezeigt, welche ein Stützrohr 51 und einen unteren Teil der Stützeinheit 52 umfasst, welche teleskopisch ineinander greifen. Die Stützeinheit 50 ist über eine primäre Montagevorrichtung 1, welche einen Abstützbereich 20 aufweist, an einer Montagekonsole 60 in Stützrichtung X formschlüssig abgestützt. Der Abstützbereich 20 der Montagevorrichtung 1 wird in der dargestellten Ausführungsform durch einen Vorsprung in Querrichtung Q gebildet, welcher sich in Stützrichtung X unterhalb des Hinterschneidungsabschnitts 66 der Montagekonsole 60 befindet und mit diesem formschlüssig über die Anlagefläche 21 in Eingriff steht. Der Hinterschneidungsabschnitt 66 der Montagekonsole 60 erstreckt sich dabei ebenfalls in Querrichtung Q. Die Montagekonsole 60 ist an einer Festlegungsfläche 31 des weiteren Elements 30 festgelegt. Zur weiteren Abstützung verfügt die in der Figur 7 dargestellte Ausführungsform der Stützeinheit 50 zusätzlich noch über eine sekundäre Montagevorrichtung 1, welche im unteren Bereich der Stützeinheit 50 vorgesehen ist.

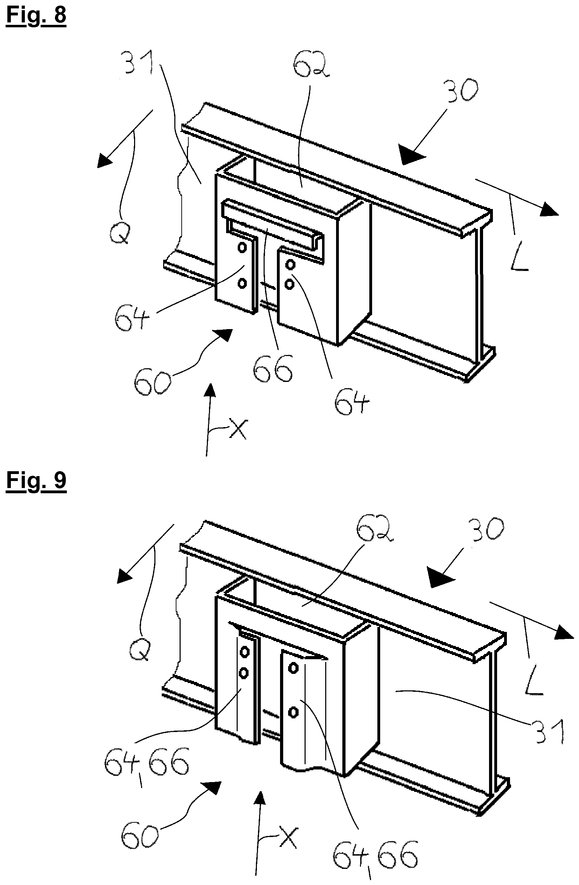

In der Figur 8 ist eine Montagekonsole 60 dargestellt, wobei diese über zwei Anordnungsbereiche 64 verfügt. Zur Festlegung einer Montagevorrichtung verfügt jeder der Anordnungsbereiche 64 über zwei Öffnungen. Zusätzlich umfasst die Montagekonsole 60 in Stützrichtung X oberhalb der Anordnungsabschnitte 64 einen Hinterschneidungsabschnitt 66, welcher derart ausgestaltet ist, dass dieser formschlüssig mit einer Montagevorrichtung in Eingriff gebracht werden kann. Der Hinterschneidungsabschnitt 66 verhindert dabei durch Formschluss eine potentielle Verlagerung der Montagevorrichtung in Querrichtung Q und in Stützrichtung X. Zur Festlegung an einer Festlegungsfläche 31 des weiteren Elements 30 verfügt die Montagekonsole 60 über einen Festlegungsbereich 62, welcher in Querrichtung Q distal gegenüber liegend zum Anordnungsabschnitt 64 angeordnet ist. In der in der Figur 8 dargestellten Ausführungsform ist der Festlegungsbereich 62 dabei an dem weiteren Element 30 festgeschweißt. Alternativ bevorzugt kann die Montagekonsole jedoch auch am weiteren Element 30 bzw. an der Festlegungsfläche 31 des weiteren Elements 30 reversibel - z.B. durch eine Schraubverbindung - festgelegt sein. Zusätzlich stützt sich die Montagekonsole 60 auch am weiteren Element 30 dadurch ab, dass dies formschlüssig unter den oberen Gurt des Trägers des weiteren Elements 30 greift.

Die in der Figur 9 dargestellte Ausführungsform einer Montagekonsole 60 unterscheidet sich unter anderem zu der in der Figur 8 dargestellten Ausführungsform dadurch, dass die Hinterschneidung derart gestaltet ist, dass die Hinterschneidungsabschnitte 66 in den Anordnungsbereichen 64 ausgebildet sind. Um dies zu erreichen, stehen die beiden Anordnungsbereiche 64 und somit auch die Hinterschneidungsabschnitte 66 in Querrichtung Q vor. Die Normale der Festlegungsfläche 31 des weiteren Elements 30 ist dabei parallel zu der Querrichtung Q orientiert.

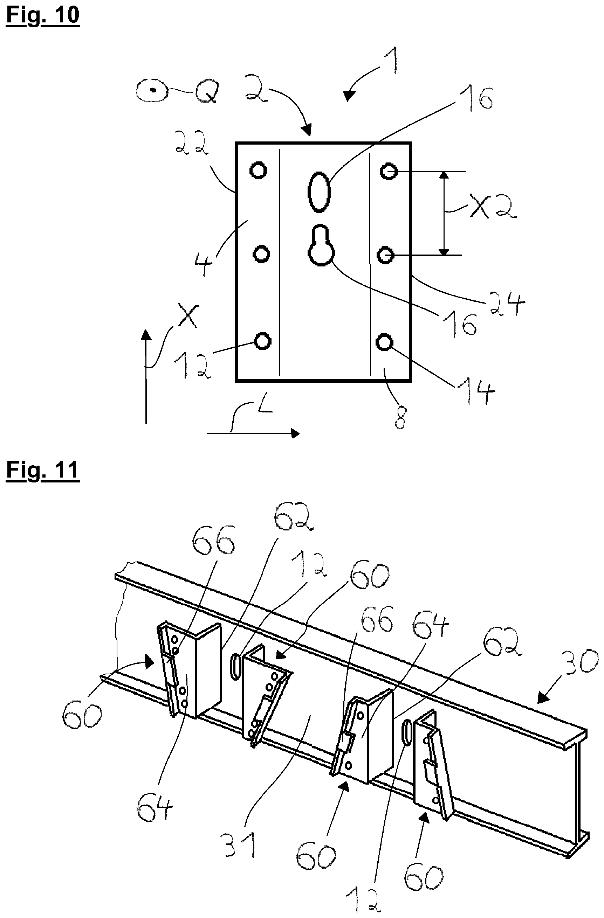

Die Ausführungsform der in der Figur 10 dargestellten Montagevorrichtung 1 umfasst im ersten und zweiten Befestigungsbereich (4, 8) jeweils drei Löcher (12, 14), wobei sich diese Löcher (12, 14) in eine Lochrichtung erstrecken, welche parallel zur Querrichtung Q orientiert ist. Die Löcher 14 des zweiten Befestigungsbereichs 8 weisen einen Abstand X2 in Stützrichtung X zueinander auf. Im Stützbereich 2 der Montagekonsole 60 sind Öffnungen 16 vorgesehen. Diese Öffnungen 16 sind dabei zum form- und kraftschlüssigen Festlegen einer Stützeinheit 50 (nicht dargestellt) ausgelegt. Das formschlüssige Festlegen erfolgt insbesondere durch die schlüssellochartige Öffnung 16 des Festlegungsbereichs 2. Wobei nicht dargestellte Montagemittel durch den größeren Teil der schlüssellochförmigen Öffnung 16 geführt werden können, nicht jedoch durch den obigen verengten Bereich der Öffnung 16, sodass hierdurch eine formschlüssige Fixierung der Stützeinheit 50 in Quer- Q, Längs- L und/oder in die Stützrichtung X an der Montagevorrichtung 1 erfolgen kann.

In der Figur 11 sind verschiedene Ausführungsformen von Montagekonsolen 60 dargestellt. Generell umfassen alle diese Ausführungsformen jeweils einen Festlegungsbereich 62, einen winkligen bzw. halb-V-förmigen Anordnungsbereich 64 sowie einen Hinterschneidungsabschnitt 66. Zur Festlegung einer Montagevorrichtung 1 (nicht dargestellt) werden in den dargestellten Ausführungsformen daher jeweils zwei Montagekonsolen 60 verwendet. Durch diese Ausgestaltung kann eine Zentrierwirkung erreicht werden. Die dargestellten Montagekonsolen 60 sind jeweils an den Festlegungsbereichen 62 an einer Festlegungsfläche 31 des weiteren Elements 30 festgeschweißt.

### Bezugszeichenliste:

- 1 -: Montagevorrichtung
- 2 -: Stützbereich
- 4 -: erster Befestigungsbereich
- 6 -: erste Lochreihe
- 8 -: zweiter Befestigungsbereich
- 10 -: zweite Lochreihe
- 12 -: Loch (im ersten Befestigungsbereich)
- 14 -: Loch (im zweiten Befestigungsbereich)
- 16 -: Öffnung
- 20 -: Abstützbereich
- 21 -: Anlagefläche
- 22 -: distal berandende Fläche des ersten Befestigungsbereichs
- 24 -: distal berandende Fläche des zweiten Befestigungsbereichs
- 30 -: weiteres Element
- 31 -: Festlegungsfläche
- 50 -: Stützeinheit
- 51 -: Stützrohr
- 52 -: unterer Teil der Stützeinheit
- 60 -: Montagekonsole
- 62 -: Festlegungsbereich
- 64 -: Anordnungsbereich
- 66 -: Hinterschneidungsabschnitt
- D -: Durchmesser
- L -: Längsrichtung
- L1 -: Abstand in Längsrichtung der Löcher der ersten Lochreihe
- L2 -: Abstand in Längsrichtung der Löcher der zweiten Lochreihe
- M -: mittlerer Abstand
- N -: Normale der distal berandenden Fläche
- Q -: Querrichtung
- W -: Wandstärke
- W1 -: erster Winkel
- W2 -: zweiter Winkel
- W3 -: dritter Winkel
- X -: Stützrichtung
- X1 -: Abstand in Stützrichtung der Löcher der ersten Lochreihe
- X2 -: Abstand in Stützrichtung der Löcher der zweiten Lochreihe

## Patentansprüche

1. Montagevorrichtung (1) für eine Stützeinheit (50), insbesondere für Nutzfahrzeuge, umfassend
zumindest einen Stützbereich (2), einen ersten Befestigungsbereich (4) und einen zweiten Befestigungsbereich (8),
wobei der Stützbereich (2) dazu ausgelegt ist, die Stützkräfte, insbesondere in Stützrichtung (X), von der Stützeinheit (50) oder einem Stützrohr (51) aufzunehmen,
wobei der erste Befestigungsbereich (4) und der zweite Befestigungsbereich (8) dazu ausgelegt sind, die Montagevorrichtung (1) an einem weiteren Element (30), insbesondere einem Sattelanhänger, festzulegen,
wobei der erste Befestigungsbereich (4) zumindest ein Loch (12) aufweist, wobei der zweite Befestigungsbereich (8) zumindest ein Loch (14) aufweist, und
wobei die Löcher (12,14) dazu ausgelegt sind, Befestigungsmittel aufzunehmen,
wobei der erste Befestigungsbereich (4) eine Vielzahl von Löchern (12) aufweist, welche eine erste Lochreihe (6) bilden, und
wobei der zweite Befestigungsbereich (8) eine Vielzahl von Löchern (14) aufweist, welche eine zweite Lochreihe (10) bilden, **dadurch gekennzeichnet, dass**
die erste Lochreihe (6) schräg verläuft, und/oder
die zweite Lochreihe (10) schräg verläuft.

2. Montagevorrichtung (1) gemäß Anspruch 1,
wobei Abstand der Löcher (12) der ersten Lochreihe (6) und/oder der Abstand der Löcher (14) der zweiten Lochreihe (10) nicht äquidistant zwischen einigen Löchern (12, 14) ist.

3. Montagevorrichtung (1) gemäß Anspruch 1 oder 2,
wobei zumindest zwei Löcher (12) der ersten Lochreihe (6) unterschiedliche Geometrien, insbesondere Durchmesser (D), aufweisen, und/oder wobei zumindest zwei Löcher (14) der zweiten Lochreihe (10) unterschiedliche Geometrien, insbesondere Durchmesser (D), aufweisen.

4. Montagevorrichtung (1) gemäß einem der vorhergehenden Ansprüche,
wobei das/die Löcher (12) des ersten Befestigungsbereichs (4) und/oder das/die Löcher (14) des zweiten Befestigungsbereichs (6) einen Durchmesser (D1, D2) aufweisen, welcher im Verhältnis zu einer Wandstärke (W) des jeweiligen Befestigungsbereichs (4,6) von 2,33 bis 4,75 liegt.

5. Montagevorrichtung gemäß einem der vorhergehenden Ansprüche,
wobei die erste Lochreihe (6) mit der zweiten Lochreihe (10) einen ersten Winkel (W1) miteinander bilden, welcher im Bereich von 87° bis 5°, bevorzugt in einem Bereich von 45° bis 10° und besonders bevorzugt zwischen 26° und 19° liegt.

6. Montagevorrichtung (1) gemäß einem der vorhergehenden Ansprüche ,
wobei der Abstand (X1) in die Stützrichtung (X) benachbarter Löcher (12) der ersten Lochreihe (6) zu einander und/oder
wobei der Abstand (X2) in Stützrichtung (X) benachbarter Löcher (14) der zweiten Lochreihe (10) zu einander in einem Verhältnis zu der Wandstärke (W) des jeweiligen Befestigungsbereichs (4,6) in einem Bereich von 7,5 bis 17,5, bevorzugt in einem Bereich von 8,3 bis 16,3 und besonders bevorzugt in einem Bereich von 10 bis 15 steht.

7. Montagevorrichtung (1) gemäß einem der vorhergehenden Ansprüche,
wobei der Abstand (L1) in eine Längsrichtung (L) benachbarter Löcher (12) der ersten Lochreihe (6) zu einander und/oder
wobei der Abstand (L2) in die Längsrichtung (L) benachbarter Löcher (14) der zweiten Lochreihe (10) zu einander in einem Verhältnis zu der Wandstärke (W) des jeweiligen Befestigungsbereichs (4,6) von 0,5 bis 5, bevorzugt 0,8 bis 3,8 und besonders bevorzugt 1,1 bis 2, stehen.

8. Montagevorrichtung (1) gemäß einem der vorhergehenden Ansprüche,
wobei der mittlere Abstand (M) der ersten Lochreihe (6) zur zweiten Lochreihe (10) in einem Verhältnis zu einer gemittelten Wandstärke der Befestigungsbereiche (4,6) im Bereich von 29 bis 62,5, bevorzugt in einem Bereich von 30 bis 51 und besonders bevorzugt in einem Bereich von 31,5 bis 48 liegt.

9. Montagevorrichtung (1) gemäß einem der vorhergehenden Ansprüche,
wobei die Normale (N) einer distal berandenden Fläche (22) des ersten Befestigungsbereichs (4), insbesondere in Längsrichtung (L), einen zweiten Winkel (W2) von 55° bis 87° mit der Stützrichtung (X) bildet und/oder wobei die Normale (N) einer zweiten distal berandenden Fläche (24) des zweiten Befestigungsbereichs (8), insbesondere in Längsrichtung (L), einen dritten Winkel (W3) von 55° bis 87° mit der Stützrichtung (X) bildet.

10. Montagevorrichtung (1) gemäß einem der vorhergehenden Ansprüche,
wobei die Montagevorrichtung (1) einen Abstützbereich (20) aufweist, welcher sich in eine Querrichtung (Q) oder eine Lochrichtung von zumindest einem der Befestigungsbereiche (4,6) oder dem Stützbereich (2) weg erstreckt und eine Anlagefläche (21) aufweist, welche dazu ausgelegt ist, formschlüssig eine Kraft von der Montagevorrichtung (1) auf das weitere Element (30), insbesondere in Stützrichtung (X), zu übertragen.

11. Montagesystem umfassend eine Montagevorrichtung gemäß einem der vorhergehenden Ansprüche und eine Montagekonsole (60),
wobei die Montagekonsole (60) einen Festlegungsbereich (62) und einen Anordnungsbereich (64) umfasst, wobei der Anordnungsbereich (64) mit der Montagevorrichtung (1) kontaktiert, und
wobei der Festlegungsbereich (62) dazu ausgelegt ist, an einer Festlegungsfläche (31) eines weiteren Elements (30) angeordnet zu sein.

## Claims

1. A mounting device (1) for a support unit (50), in particular for commercial vehicles, comprising at least one supporting area (2), a first fixing area (4) and a second fixing area (8),
wherein the supporting area (2) is designed to absorb the supporting forces, especially in the supporting direction (X), from the support unit (50) or a support tube (51),
wherein the first fixing area (4) and the second fixing area (8) are designed to fix the mounting device (1) to a further element (30), in particular a semitrailer,
wherein the first fixing area (4) has at least one hole (12), wherein the second fixing area (8) has at least one hole (14), and wherein the holes (12, 14) are designed to receive fixing means,
wherein the first fixing area (4) has a plurality of holes (12), forming a first hole series (6), and
wherein the second fixing area (8) has a plurality of holes (14), forming a second hole series (10), **characterized in that**
the first hole series (6) is slanted, and/or
the second hole series (10) is slanted.

2. The mounting device (1) as claimed in claim 1,
wherein the spacing of the holes (12) of the first hole series (6) and/or the spacing of the holes (14) of the second hole series (10) is not equidistant between certain holes (12, 14).

3. The mounting device (1) as claimed in claim 1 or 2,
wherein at least two holes (12) of the first hole series (6) have different geometries, especially diameters (D), and/or
wherein at least two holes (14) of the second hole series (10) have different geometries, especially diameters (D).

4. The mounting device (1) as claimed in one of the preceding claims,
wherein the hole(s) (12) of the first fixing area (4) and/or
the hole(s) (14) of the second fixing area (6) have a diameter (D1, D2) which lies in a ratio to a wall thickness (W) of the respective fixing area (4, 6) of 2.33 to 4.75.

5. The mounting device as claimed in one of the preceding claims,
wherein the first hole series (6) forms a first angle (W1) with the second hole series (10) lying in the range of 87° to 5°, preferably in a range of 45° to 10° and especially preferably between 26° and 19°.

6. The mounting device (1) as claimed in one of the preceding claims,
wherein the spacing (X1) in the supporting direction (X) between adjacent holes (12) of the first hole series (6) and/or
wherein the spacing (X2) in the supporting direction (X) between adjacent holes (14) of the second hole series (10) stands in a ratio to the wall thickness (W) of the respective fixing area (4, 6) in a range of 7.5 to 17.5, preferably in a range of 8.3 to 16.3 and especially preferably in a range of 10 to 15.

7. The mounting device (1) as claimed in one of the preceding claims,
wherein the spacing (L1) in a longitudinal direction (L) between adjacent holes (12) of the first hole series (6) and/or
wherein the spacing (L2) in the longitudinal direction (L) between adjacent holes (14) of the second hole series (10) stand in a ratio to the wall thickness (W) of the respective fixing area (4, 6) in a range of 0.5 to 5, preferably 0.8 to 3.8 and especially preferably 1.1 to 2.

8. The mounting device (1) as claimed in one of the preceding claims,
wherein the mean spacing (M) between the first hole series (6) and the second hole series (10) lies in a ratio to an averaged wall thickness of the fixing areas (4, 6) in the range of 29 to 62.5, preferably in a range of 30 to 51 and especially preferably in a range of 31.5 to 48.

9. The mounting device (1) as claimed in one of the preceding claims,
wherein the normal (N) of a distally bordering surface (22) of the first fixing area (4), especially in the longitudinal direction (L), makes a second angle (W2) of 55° to 87° with the supporting direction (X) and/or
wherein the normal (N) of a second distally bordering surface (24) of the second fixing area (8), especially in the longitudinal direction (L), makes a third angle (W3) of 55° to 87° with the supporting direction (X).

10. The mounting device (1) as claimed in one of the preceding claims,
wherein the mounting device (1) comprises a bracing area (20), which extends in a transverse direction (Q) or a hole direction away from at least one of the fixing areas (4, 6) or the supporting area (2) and comprises a bearing surface (21) which is adapted to transmit a force, by form fit, from the mounting device (1) to the further element (30), especially in the supporting direction (X).

11. A mounting system comprising a mounting device as claimed in one of the preceding claims und a mounting bracket (60)
wherein the mounting bracket comprises a fixing area (62) and a mounting area (64), wherein the mounting area (64) makes contact with the mounting device (1), and
wherein the fixing area (62) is adapted to being mounted on a fixing surface (31) of a further element (30).

## Revendications

1. Dispositif de montage (1) pour une unité de soutien (50), en particulier pour des véhicules utilitaires, comprenant
au moins une zone de soutien (2), une première zone de fixation (4) et une deuxième zone de fixation (8),
dans lequel
la zone de soutien (2) est conçue pour encaisser les forces de soutien, en particulier dans la direction de soutien (X), provenant de l'unité de soutien (50) ou d'un tube de soutien (51),
la première zone de fixation (4) et la deuxième zone de fixation (8) sont conçues pour immobiliser le dispositif de montage (1) à un autre élément (30), en particulier à une semi-remorque,
la première zone de fixation (4) présente au moins un trou (12),
la deuxième zone de fixation (8) présente au moins un trou (14), et
les trous (12, 14) sont conçus pour recevoir des moyens de fixation,
la première zone de fixation (4) comporte une pluralité de trous (12) formant une première rangée de trous (6), et
la deuxième zone de fixation (8) comporte une pluralité de trous (14) formant une deuxième rangée de trous (10),
**caractérisé en ce que**
la première rangée de trous (6) s'étend en oblique, et/ou
la deuxième rangée de trous (10) s'étend en oblique.

2. Dispositif de montage (1) selon la revendication 1,
dans lequel
la distance des trous (12) de la première rangée de trous (6) et/ou la distance des trous (14) de la deuxième rangée de trous (10) n'est pas équidistante entre quelques-uns des trous (12, 14).

3. Dispositif de montage (1) selon la revendication 1 ou 2,
dans lequel
au moins deux trous (12) de la première rangée de trous (6) ont des géométries différentes, en particulier des diamètres (D) différents, et/ou au moins deux trous (14) de la deuxième rangée de trous (10) ont des géométries différentes, en particulier des diamètres (D) différents.

4. Dispositif de montage (1) selon l'une des revendications précédentes,
dans lequel
le ou les trous (12) de la première zone de fixation (4) et/ou le ou les trous (14) de la deuxième zone de fixation (6) présentent un diamètre (D1, D2) dont le rapport sur une épaisseur de paroi (W) de la zone de fixation respective (4, 6) est de 2,33 à 4,75.

5. Dispositif de montage selon l'une des revendications précédentes,
dans lequel
la première rangée de trous (6) forme avec la deuxième rangée de trous (10) un premier angle (W1) qui est dans la plage entre 87° et 5°, de préférence entre 45° et 10° et de manière particulièrement préférée entre 26° et 19°.

6. Dispositif de montage (1) selon l'une des revendications précédentes,
dans lequel
la distance (X1) dans la direction de soutien (X) de trous adjacents (12) de la première rangée de trous (6) les uns par rapport aux autres, et/ou
la distance (X2) dans la direction de soutien (X) de trous adjacents (14) de la deuxième rangée de trous (10) les uns par rapport aux autres
est dans un rapport sur l'épaisseur de paroi (W) de la zone de fixation respective (4, 6) qui est dans une plage de 7,5 à 17,5, de préférence dans une plage de 8,3 à 16,3 et de manière particulièrement préférée dans une plage de 10 à 15.

7. Dispositif de montage (1) selon l'une des revendications précédentes,
dans lequel
la distance (L1) dans une direction longitudinale (L) de trous adjacents (12) de la première rangée de trous (6) les uns par rapport aux autres et/ou
la distance (L2) dans la direction longitudinale (L) de trous adjacents (14) de la deuxième rangée de trous (10) les uns par rapport aux autres
est dans un rapport sur l'épaisseur de paroi (W) de la zone de fixation (4, 6) respective qui est de 0,5 à 5, de préférence de 0,8 à 3,8 et de manière particulièrement préférée de 1,1 à 2.

8. Dispositif de montage (1) selon l'une des revendications précédentes,
dans lequel
la distance moyenne (M) de la première rangée de trous (6) par rapport à la deuxième rangée de trous (10) est dans un rapport sur une épaisseur de paroi moyenne des zones de fixation (4, 6) qui est dans la plage de 29 à 62,5, de préférence dans une plage de 30 à 51 et de manière particulièrement préférée dans une plage de 31,5 à 48.

9. Dispositif de montage (1) selon l'une des revendications précédentes,
dans lequel
la normale (N) d'une surface (22) de la première zone de fixation (4), bordée distalement, en particulier dans la direction longitudinale (L), forme un deuxième angle (W2) de 55° à 87° avec la direction de soutien (X), et/ou
la normale (N) d'une deuxième surface (24) de la deuxième zone de fixation (8), bordée distalement, en particulier dans la direction longitudinale (L), forme un troisième angle (W3) de 55° à 87° avec la direction de soutien (X).

10. Dispositif de montage (1) selon l'une des revendications précédentes,
dans lequel
le dispositif de montage (1) présente une zone d'appui (20) qui s'étend dans une direction transversale (Q) ou dans une direction de trou en s'éloignant d'au moins une des zones de fixation (4, 6) ou de la zone de soutien (2) et présente une surface d'appui (21) qui est conçue pour transmettre une force du dispositif de montage (1) à l'autre élément (30) par coopération de forme, en particulier dans la direction de soutien (X).

11. Système de montage (60) comprenant un dispositif de montage selon l'une des revendications précédentes et une console de montage (60),
dans lequel
la console de montage (60) comprend une zone d'immobilisation (62) et une zone d'agencement (64), la zone d'agencement (64) étant en contact avec le dispositif de montage, et
la zone d'immobilisation (62) est conçue pour être agencée sur une surface d'immobilisation (31) d'un autre élément (30).
